# EUROPÄISCHE PATENTSCHRIFT

(11) **EP 0 567 858 B1**
(45) Veröffentlichungstag und Bekanntmachung des Hinweises auf die Patenterteilung: **23.12.1998**
(21) Anmeldenummer: 93106140.2
(22) Anmeldetag: 15.04.1993
(51) Int. Cl.: G06F 9/445

(54) **Verfahren zum Laden einer für den Betrieb einer programmgesteuerten elektrischen Einrichtung erforderlichen Betriebs-Steuerbefehlsfolge**
Method for loading an operation command sequence necessary for operating a program controlled electrical apparatus
Méthode pour charger une séquence de commandes d'opération nécessaire pour opérer un dispositif électrique commandé par un programme

(30) Priorität: 30.04.1992 DE 4214330
(43) Veröffentlichungstag der Anmeldung: 03.11.1993
(73) Patentinhaber: SIEMENS AKTIENGESELLSCHAFT, 80333 München (DE)
(72) Erfinder: Rudorff, Ingo, Dipl.-Ing., W-8000 München 83 (DE); Schürmann, Cornelius, Dipl.-Ing., W-8000 München 83 (DE)

(56) Entgegenhaltungen:
- EP-A- 0 106 213
- EP-A- 0 479 427
- EP-A- 0 504 860

## Beschreibung

Die Erfindung betrifft ein Verfahren gemäß Oberbegriff des Patentanspruchs 1. Ein derartiges Verfahren ist bereits aus der europäischen Patentanmeldung EP-A-0 338 290 bekannt. Mit diesem bekannten Verfahren ist es lediglich möglich, eine Betriebs-Steuerbefehlsfolge in eine elektrische Einrichtung mit Hilfe einer Ladeeinrichtung zu laden, welche unmittelbar mit der betreffenden elektrischen Einrichtung verbunden ist.

Es ist nun Aufgabe der vorliegenden Erfindung, einen Weg zu zeigen, wie ein Verfahren gemäß Oberbegriff des Patentanspruchs 1 ausgebildet werden kann, um mit Hilfe einer Ladeeinrichtung eine Betriebs-Steuerbefehlsfolge sowohl in eine mit der betreffenden Ladeeinrichtung unmittelbar verbundene elektrische Einrichtung als auch in eine weitere mit dieser in Verbindung stehende elektrische Einrichtung laden zu können.

Gelöst wird diese Aufgabe durch die im Patentanspruch 1 angegebenen Verfahrensmerkmale. Der Vorteil besteht dabei darin, daß durch das Vorhandensein zweier gesonderter Lade-Steuerbefehlsfolgen in einer elektrischen Einrichtung und durch die Möglichkeit einer unabhängigen Aktivierung dieser Lade-Steuerbefehlsfolgen durch eine Ladeeinrichtung mit einem geringen zusätzlichen Steuerungsaufwand eine Betriebs-Steuerbefehlsfolge wahlweise in eine mit der Ladeeinrichtung direkt verbundene oder in eine von der Ladeeinrichtung abgesetzte elektrische Einrichtung laden zu können. Ein weiterer Vorteil besteht darin, daß für letzteres ein ohnehin zwischen zwei elektrischen Einrichtungen bestehender Verbindungsweg benutzt wird, so daß keine gesonderten Steuerleitungen zwischen der Ladeeinrichtung und einer davon abgesetzten elektrischen Einrichtung erforderlich sind.

Vorteilhafte Ausgestaltungen des Verfahrens gemäß der vorliegenden Erfindung ergeben sich aus den Patentansprüchen 2 bis 6. Der Vorteil der Ausgestaltung gemäß Patentanspruch 2 besteht dabei darin, daß für die Übertragung der Steuersignale und der Betriebs-Steuerbefehlsfolge ein von der Struktur her einheitliches Blockformat gewählt ist, so daß in der jeweiligen elektrischen Einrichtung mit einem geringen Steuerungsaufwand eine Behandlung der Steuersignale bzw. der in Datenblöcken übertragenen Bits der Betriebs-Steuerbefehlsfolge möglich ist.

Durch die gemäß Patentanspruch 3 vorgesehene Überprüfung auf eine fehlerfreie Übertragung und die damit verbundene Abgabe eines Quittungssignales ist in einfacher Weise sichergestellt, daß das Laden einer Betriebs-Steuerbefehlsfolge lediglich auf ein ordnungsgemäßes Aktivieren der in der jeweiligen elektrischen Einrichtung gespeicherten Lade-Steuerbefehlsfolge hin durchgeführt wird.

Die Ausgestaltungen gemäß Patentansprüche 4 und 5 bringen den Vorteil mit sich, daß einerseits bei einer fehlerhaften Übertragung eines Datenblockes dessen Übertragung von der Ladeeinrichtung her sofort wiederholt werden kann. Andererseits ist es durch die Abgabe eines der Quittungssignale nach dem Abspeichern einer in einem Datenblock enthaltenen Bitfolge in der Ladeeinrichtung in einfacher Weise möglich, zu überprüfen, ob sämtliche an der Speicherung beteiligten Schaltungselemente einschließlich des Übertragungsweges fehlerfrei arbeiten oder ein Fehlverhalten der unmittelbar an der Speicherung beteiligten Schaltungselemente vorliegt. Auf diese Weise ist ggf. eine sofortige Fehlereingrenzung möglich.

Die Ausgestaltung gemäß Patentanspruch 6 bringt den Vorteil mit sich, daß für die Speicherung der zweiten Lade-Steuerbefehlsfolge kein gesonderter Festwertspeicher erforderlich ist, sondern dafür ein ausgewählter Speicherbereich des Arbeitsspeichers benutzt wird.

Im folgenden wird nun die vorliegende Erfindung anhand von Zeichnungen näher erläutert.
FIG 1 zeigt in einem Blockschaltbild die Verbindung zweier elektrischer Einrichtungen in Form von Datenübertragungseinrichtungen sowie eine an eine der Datenübertragungseinrichtungen angeschlossene Ladeeinrichtung,
FIG 2 zeigt in einem Blockschaltbild den Aufbau einer in den Datenübertragungseinrichtungen jeweils enthaltenen, in FIG 1 lediglich schematisch dargestellten Speicheranordnung und
FIG 3 zeigt die Struktur eines Steuersignalblockes und eines Datenblockes, auf welche im folgenden näher eingegangen wird.

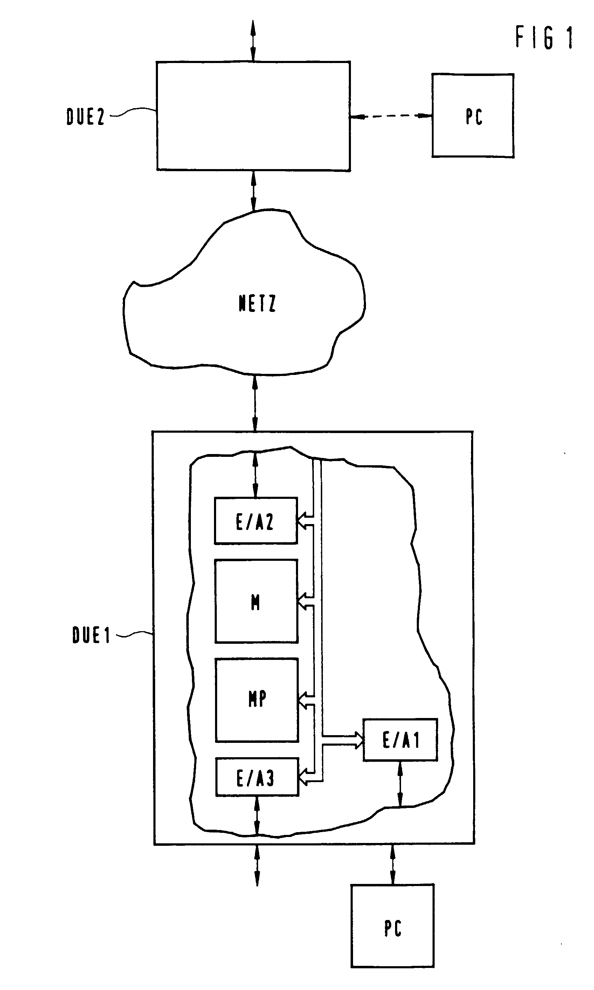

In FIG 1 sind zwei miteinander verbundene elektrische Einrichtungen DUE1 und DUE2 dargestellt, bei denen es sich beispielsweise um in gleicher Weise aufgebaute Datenübertragungseinrichtungen handeln möge, über welche Teilnehmerendeinrichtungen an ein Datenvermittlungsnetz anschließbar sind. Wie dargestellt, möge die Verbindung dieser Datenübertragungseinrichtungen dabei über ein derartiges Datenvermittlungsnetz erfolgen.

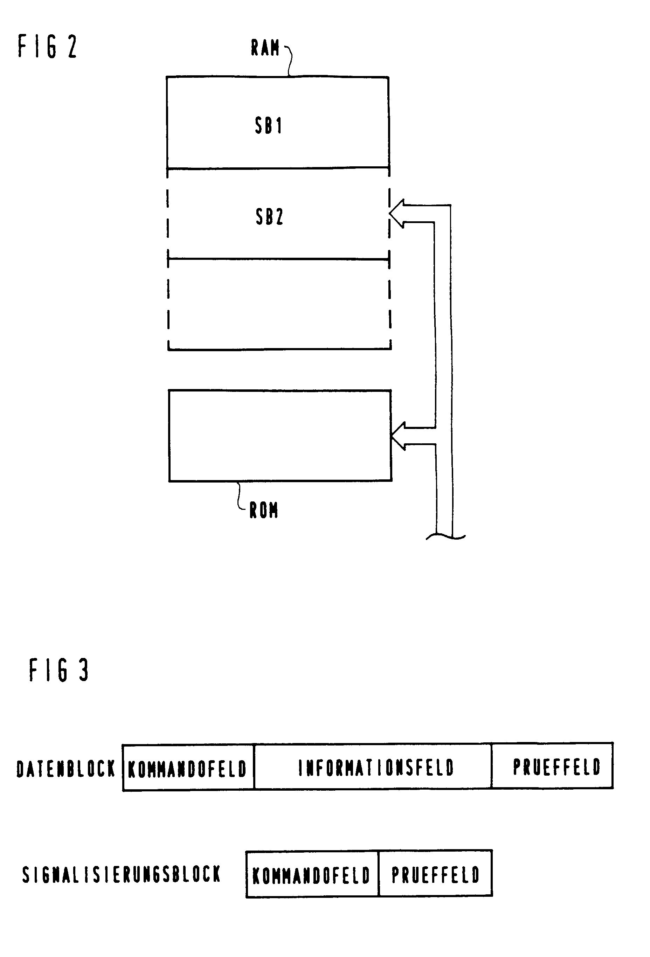

Bei jeder der Datenübertragungseinrichtungen DUE1 und DUE2 handelt es sich um eine programmgesteuerte Einrichtung, die beispielsweise eine Mikroprozessor-Anordnung aufweisen möge. In FIG 1 ist dabei lediglich ausschnittweise die Mikroprozessor-Anordnung für die Datenübertragungseinrichtung DUE1 dargestellt. Danach ist an ein Busleitungssystem eines Mikroprozessors MP, bei dem es sich beispielsweise um einen sogenannten Ein-Chip-Mikroprozessor handeln möge, eine Speicheranordnung M angeschlossen. Wie aus FIG 2 hervorgeht, weist diese Speicheranordnung einen Festwertspeicher ROM sowie einen Schreib-Lese-Speicher RAM auf. In dem Festwertspeicher ist dabei eine Lade-Steuerbefehlsfolge gespeichert, mit deren Hilfe eine für den Betrieb der Datenübertragungseinrichtung erforderliche Betriebs-Steuerbefehlsfolge in den Schreib-Lese-Speicher RAM ladbar ist.

An das genannte Busleitungssystem sind weiterhin drei Schnittstellenanordnungen E/A1, E/A2 und E/A3 angeschlossen. Die Schnittstellenanordnungen E/A2 und E/A3 dienen dabei für die Aufnahme und Abgabe von Datensignalen über Teilnehmerleitungen bzw. über das genannte Datenvermittlungsnetz. Die Schnittstellenanordnung E/A1 ist dagegen für die Übertragung von Steuersignalen vorgesehen. An diese ist, wie in FIG 1 dargestellt, eine Ladeeinrichtung PC beispielsweise in Form eines Personalcomputers anschließbar. Von dieser Ladeeinrichtung her ist u.a. die zuvor erwähnte, für den Betrieb der Datenübertragungseinrichtung DUE1 erforderliche Betriebs-Steuerbefehlsfolge ladbar. Für dieses Laden ist in der Ladeeinrichtung PC neben der Betriebs-Steuerbefehlsfolge eine Übertragungs-Steuerbefehlsfolge gespeichert.

Wie aus FIG 1 weiterhin hervorgeht, ist die gerade erwähnte Ladeeinrichtung PC auch alternativ an die Datenübertragungseinrichtung DUE2 anschließbar. Für die folgenden Erläuterungen wird jedoch davon ausgegangen, daß diese Ladeeinrichtung lediglich mit der Datenübertragungseinrichtung DUE1 verbunden ist.

Mit der Inbetriebnahme der beiden Datenübertragungseinrichtungen DUE1 und DUE2 gehen diese durch ein automatisches Aktivieren der in diesen jeweils gespeicherten Lade-Steuerbefehlsfolge in einen Ladezustand. In diesem wird zunächst durch den zugehörigen Mikroprozessor MP ermittelt, ob an der Schnittstellenanordnung E/A1 die Ladeeinrichtung PC angeschlossen ist. Liegt dieser Fall nicht vor, erfolgt zunächst eine Überprüfung derjenigen Speicherbereiche des Schreib-Lese-Speichers RAM, welche für die Speicherung der für den Betrieb der jeweiligen Datenübertragungseinrichtung erforderlichen Betriebs-Steuerbefehlsfolge reserviert sind. Dazu wird über den Speicherinhalt dieser Speicherbereiche eine Prüfsumme gebildet und diese mit einer in dem Schreib-Lese-Speicher RAM gespeicherten Prüfsumme verglichen. Bei einer Identität der miteinander verglichenen Prüfsummen erfolgt anschließend ein Wechsel von dem bisherigen Ladezustand in einen Betriebszustand, in welchem die jeweilige Datenübertragungseinrichtung DUE1 bzw. DUE2 für eine Aufnahme und/oder Abgabe von Datensignalen über die Schnittstellenanordnung E/A2 bereit ist. Weichen dagegegen die genannten Prüfsummen voneinander ab, so verbleibt die jeweilige Datenübertragungseinrichtung in dem Ladezustand.

Ist beispielsweise bei der Inbetriebnahme der Datenübertragungseinrichtung DUE1 die Ladeeinrichtung PC an der Schnittstellenanordnung E/A1 angeschlossen, so bewirkt der zugehörige Mikroprozessor MP unter der Steuerung der Lade-Steuerbefehlsfolge die Übertragung eines Informationssignales beispielsweise in Form einer bestimmten Bitkombination einer festgelegten Anzahl von Bits zu der Ladeeinrichtung PC hin. Durch diese Bitkombination ist dabei einerseits der Ladezustand der Datenübertragungseinrichtung DUE1, d.h. eine Ladebereitschaft, und andererseits der Gerätetyp bzw. die Gerätekonfiguration angezeigt.

Auf das betreffende Informationssignal hin wird in der Ladeeinrichtung PC die zuvor erwähnte Übertragungs-Steuerbefehlsfolge aktiviert. Unter deren Steuerung wird dann die zu ladende Betriebs-Steuerbefehlsfolge abschnittweise zu der Datenübertragungseinrichtung DUE1 hin übertragen. Dafür wird diese Betriebs-Steuerbefehlsfolge in Abschnitte von jeweils einer festgelegten Anzahl von Bytes, beispielsweise 64 Bytes, unterteilt und jeder dieser Abschnitte in einen zu übertragenden Datenblock eingefügt. Ein solcher Datenblock wird dabei, wie aus FIG 3 hervorgeht, durch ein Kommandofeld mit einer festgelegten Anzahl von Bits, beispielsweise 8 Bits, eingeleitet. Durch eine festgelegte Bitkombination dieser Bits ist dabei ein Datenblock als solcher gekennzeichnet. An dieses Kommandofeld schließt sich ein Informationsfeld mit einer der zu einem genannten Abschnitt gehörenden Bytes entsprechenden Länge an. Abgeschlossen wird dann ein solcher Datenblock durch ein Prüffeld mit einer Länge von z.B. 2 Bytes. In dieses Prüffeld wird dabei z.B. eine Prüfsumme eingetragen, welche sich aus einer binären Addition sämtlicher in dem zugehörigen Kommandofeld und Informationsfeld enthaltenen Bytes ergibt. Es können jedoch auch andere Prüfinformationen für die Prüfung der Datenblöcke in dem Prüffeld eingetragen sein.

Die Übertragung von Datenblöcken zu der Datenübertragungseinrichtung DUE1 hin erfolgt nach einem sogenannten "Handshaking"-Prinzip, d.h. ein Datenblock wird erst dann zu der Datenübertragungseinrichtung hin übertragen, nachdem der diesem Datenblock unmittelbar vorangegangene Datenblock von der Datenübertragungseinrichtung quittiert wurde. Dafür überprüft die Datenübertragungseinrichtung zunächst die in dem Kommando feld und Informationsfeld eines ihr gerade zugeführten Datenblockes enthaltenen Informationen hinsichtlich einer fehlerfreien Übertragung. Eine solche Überprüfung erfolgt dabei durch Bilden einer zuvor erwähnten Prüfsumme und deren Vergleich mit der in dem Prüffeld des betreffenden Datenblockes übertragenen Prüfsumme. Liegt dabei keine Identität der miteinander verglichenen Prüfsummen vor, so wird der Ladeeinrichtung PC ein das Vorliegen eines Datenübertragungsfehlers anzeigendes Quittungssignal zugeführt. Ein solches Quittungssignal wird dabei in Form eines Steuersignalblocks übertragen, welcher, wie aus FIG 3 hervorgeht, über ein zuvor genanntes Kommandofeld und Prüffeld verfügt. Durch eine festgelegte Codierung der zu dem Kommandofeld gehörenden Bits ist dabei das Vorliegen eines Übertragungsfehlers angezeigt. Auf ein solches Quittungssignal hin wird dann von der Ladeeinrichtung PC der von der Datenübertragungseinrichtung gerade als fehlerhaft erkannte Datenblock erneut übertragen. Dabei kann so vorgegangen sein, daß im Falle einer wiederholten negativen Quittierung eines Datenblockes durch die Datenübertragungseinrichtung nach einer festgelegten Anzahl von Blockwiederholungen der Ladevorgang durch die Ladeeinrichtung abgebrochen wird.

Bei einer Identität der zuvor erwähnten Prüfsummen erfolgt dagegen in der Datenübertragungseinrichtung DUE1 zunächst eine Speicherung der in dem gerade aufgenommenen Datenblock enthaltenen Bytes der zu ladenden Betriebs-Steuerbefehlsfolge in den der Datenübertragungseinrichtung zugehörigen Schreib-Lese-Speicher RAM (Speicherbereich SB2). Nach diesem Speichern findet dann durch den Mikroprozessor der Datenübertragungseinrichtung eine Überprüfung auf eine fehlerfreie Speicherung statt, indem beispielsweise über die gerade gespeicherten Bytes der Betriebs-Steuerbefehlsfolge in der bereits angegebenen Weise eine Prüfsumme gebildet und diese mit der in dem betreffenden Datenblock enthaltenen Prüfsumme verglichen wird. Bei identischen Prüfsummen wird von der Datenübertragungseinrichtung her ein den erfolgreichen Abschluß des Speichervorganges anzeigendes Quittungssignal zu der Ladeeinrichtung PC hin übertragen. Dieses Quittungssignal, durch welches damit sowohl eine fehlerfreie Datenübertragung als auch eine fehlerfreie Speicherung angezeigt ist, unterscheidet sich von dem zuvor erwähnten Quittungssignal lediglich in einer abweichenden Codierung des Kommandofeldes.

Weichen dagegen die nach der gerade erwähnten Speicherung miteinander verglichenen Prüfsummen voneinander ab, so wird der Ladeeinrichtung PC ein ein fehlerhaftes Speichern anzeigendes Quittungssignal mit einer festgelegten Codierung des Kommandofeldes zugeführt. Bei Auftreten eines solchen Quittungssignales erfolgt von der Ladeeinrichtung her eine erneute Übertragung des von dieser gerade abgegebenen Datenblocks. Auch hierbei wird von der Ladeeinrichtung her das Übertragen eines fehlerhaft abgespeicherten Datenblockes gegebenenfalls nach einer festgelegten Anzahl von Wiederholungen abgebrochen.

Anstelle der gerade erläuterten Prüfung gespeicherter Bytes anhand einer Prüfsumme kann eine solche Prüfung auch derart durchgeführt werden, daß für jedes der gerade gespeicherten Bytes ein byteweiser Vergleich mit dem jeweils in Frage kommenden Byte des zuvor aufgenommenen Datenblockes durchgeführt und bei einem Speicherfehler sofort, anderenfalls nach Prüfung sämtlicher Bytes eines der zuvor erwähnten Quittungssignale an die Ladeeinrichtung PC abgegeben wird.

Die zuvor erläuterten Steuerungsvorgänge in der Ladeeinrichtung PC und in der Datenübertragungseinrichtung DUE1 wiederholen sich solange, bis sämtliche zu der zu ladenden Betriebs-Steuerbefehlsfolge gehörenden Bytes in der Datenübertragungseinrichtung fehlerfrei gespeichert sind.

Alternativ können die von der Ladeeinrichtung PC her abzugebenden Datenblöcke auch derart gebildet sein, daß mit diesen lediglich einzelne in der Datenübertragungseinrichtung DUE1 zu speichernde Bytes übertragen werden. In diesem Falle weist der jeweilige Datenblock eine speziell festgelegte Codierung innerhalb des Kommandofeldes auf. Die Quittierung derartiger Datenblöcke erfolgt dann wieder in der zuvor erläuterten Weise. Die Übertragung eines einzelnen Bytes innerhalb eines Datenblockes kann dabei beispielsweise benutzt werden, einzelne Bytes der in der Datenübertragungseinrichtung DUE1 bereits gespeicherten Betriebs-Steuerbefehlsfolge gezielt zu ändern.

Vorstehend wurde davon ausgegangen, daß das Laden einer Betriebs-Steuerbefehlsfolge in die Datenübertragungseinrichtung DUE1 mit deren Inbetriebnahme erfolgt, d.h. daß sich die Datenübertragungseinrichtung bereits in ihrem Ladezustand befindet. Die Datenübertragungseinrichtung kann jedoch auch aus ihrem Betriebszustand heraus durch ein von der Ladeeinrichtung her gezielt abgegebenes Steuersignal in den Ladezustand überführt werden. Hierzu gibt die Ladeeinrichtung PC unter der Steuerung der in dieser gespeicherten Übertragungs-Steuerbefehlsfolge einen Steuersignalblock ab, dessen Struktur, wie aus FIG 3 hervorgeht, der Struktur der zuvor erwähnten Quittungssignale entspricht. Ein Unterschied besteht lediglich in der Codierung des zugehörigen Kommandofeldes. Auf das Auftreten eines solchen Steuersignalblockes hin wird im Betriebszustand der Datenübertragungseinrichtung DUE1 die in deren Festwertspeicher ROM gespeicherte Lade-Steuerbefehlsfolge aktiviert. Damit erfolgt ein Wechsel in den Ladezustand, welcher der Ladeeinrichtung PC durch ein oben bereits erwähntes Informationssignal angezeigt wird. Auf dieses Informationssignal hin können dann die Ladevorgänge in der zuvor erwähnten Weise durchgeführt werden.

Zusätzlich oder alternativ zu dem zuvor erläuterten Laden einer Betriebs-Steuerbefehlsfolge in die mit der Ladeeinrichtung PC direkt verbundene Datenübertragungseinrichtung DUE1 kann von der Ladeeinrichtung her auch über diese Datenübertragungseinrichtung ein Fernladen einer Betriebs-Steuerbefehlsfolge in die Datenübertragungseinrichtung DUE2 erfolgen. Hierzu gibt die Ladeeinrichtung einen Steuersignalblock mit einer ein solches Fernladen anzeigenden Codierung des zugehörigen Kommandofeldes ab. Auf diesen Steuersignalblock hin aktiviert der Mikroprozessor MP der Datenübertragungseinrichtung DUE1 nach einer Überprüfung dieses Steuersignalblockes auf einen fehlerfreien Empfang eine zweite Lade-Steuerbefehlsfolge, die beispielsweise in dem dieser Datenübertragungseinrichtung zugehörigen Schreib-Lese-Speicher RAM (Speicherbereich SB1) gespeichert ist. Unter der Steuerung dieser zweiten Lade-Steuerbefehlsfolge leitet dann die Datenübertragungseinrichtung DUE1 den gerade empfangenen Steuersignalblock über die Schnittstellenanordnung E/A2 an die Datenübertragungseinrichtung DUE2 weiter. Diese möge sich zu diesem Zeitpunkt in ihrem Betriebszustand befinden.

Der Mikroprozessor der Datenübertragungseinrichtung DUE2 aktiviert auf den Empfang des Steuersignalblockes hin eine in dem zugehörigen Schreib-Lese-Speicher RAM gespeicherte, der zuvor erwähnten zweiten Lade-Steuerbefehlsfolge der Datenübertragungseinrichtung DUE1 entsprechende Lade-Steuerbefehlsfolge, und zwar nach einer vorausgegangenen Überprüfung des Steuersignalblockes hinsichtlich einer fehlerfreien Übertragung. Nach dieser Aktivierung wird dann unter der Steuerung dieser Lade-Steuerbefehlsfolge ein dem bereits oben erwähnten Informationssignal entsprechendes Informationssignal, durch welches einerseits der Fernladezustand sowie der Gerätetyp bzw. die Gerätekonfiguration der Datenübertragungseinrichtung DUE2 angezeigt ist, zu der Datenübertragungseinrichtung DUE1 hin übertragen.
Diese leitet das Informationssignal unter der Steuerung der in dieser bereits für ein Fernladen aktivierten Lade-Steuerbefehlsfolge an die Ladeeinrichtung PC weiter. Durch dieses weitergeleitete Informationssignal wird somit der Ladeeinrichtung die Bereitschaft für ein Fernladen durch die beiden Datenübertragungseinrichtungen DUE1 und DUE2 signalisiert.

Im Anschluß daran erfolgt von der Ladeeinrichtung PC her in der bereits oben angegebenen Weise eine Übertragung von Datenblöcken über die Datenübertragungseinrichtung DUE1 zu der Datenübertragungseinrichtung DUE2 hin, um in dieser eine für den Betrieb erforderliche Betriebs-Steuerbefehlsfolge zu speichern. Die dabei in der Gegenrichtung zu der Ladeeinrichtung PC hin zu übertragenden Quittungssignale entsprechen dabei den bereits zuvor erwähnten Quittungssignalen. Die Aufgabe der Datenübertragungseinrichtung DUE1 besteht dabei einerseits in einer Weiterleitung der zuvor erwähnten, zwischen der Ladeeinrichtung PC und der Datenübertragungseinrichtung DUE2 auszutauschenden Steuersignalblöcke, Quittungssignale und Datenblöcke.

Andererseits erfolgt durch die Datenübertragungseinrichtung DUE1 eine Überprüfung dieser Blöcke auf eine fehlerfreie Übertragung, welche in der oben bereits erwähnten Weise durchgeführt wird. Ein Übertragungsfehler wird dabei der Ladeeinrichtung PC bzw. der Datenübertragungseinrichtung DUE2 durch ein Quittungssignal mit einem entsprechend codierten Kommandofeld angezeigt.

Es wurde bereits darauf hingewiesen, daß bei dem beschriebenen Ausführungsbeispiel die für ein Fernladen vorgesehene Lade-Steuerbefehlsfolge in dem Schreib-Lese-Speicher RAM der jeweiligen Datenübertragungseinrichtung DUE1 bzw. DUE2 gespeichert ist. Dabei kann diese Lade-Steuerbefehlsfolge selbst mit Hilfe der Ladeeinrichtung PC durch das zuvor beschriebene Laden in den jeweiligen Schreib-Lese-Speicher RAM eingetragen werden.

Vorstehend wurde lediglich als Beispiel davon ausgegangen, daß innerhalb der jeweiligen Datenübertragungseinrichtung als Steuermittel ein einziger Mikroprozessor vorgesehen ist. Eine solche Datenübertragungseinrichtung kann jedoch zusätzlich über periphere programmgesteuerte Einrichtungen verfügen, deren Funktion jeweils durch eine in diesen jeweils gespeicherte, individuelle Betriebs-Steuerbefehlsfolge festgelegt ist. In diesem Falle wird die jeweilige Betriebs-Steuerbefehlsfolge von der Ladeeinrichtung PC her über den Mikroprozessor der jeweiligen Datenübertragseinrichtung in die in Frage kommende periphere Einrichtung geladen. Die für ein solches Laden bzw. Fernladen erforderlichen Steuerungsvorgänge, d.h. die Übertragung von Steuersignalen, Quittungssignalen und Datenblöcken, entsprechen dabei den zuvor erläuterten Steuerungsvorgängen.

Bei dem vorstehend erläuterten Ausführungsbeispiel ist vorgesehen, daß die für das Fernladen vorgesehene Lade-Steuerbefehlsfolge sowie die Betriebs-Steuerbefehlsfolge in einem nach dem Laden schreibgeschützten Bereich eines Schreib-Lese-Speichers der jeweiligen Datenübertragungseinrichtung DUE1 bzw. DUE2 gespeichert sind. Um zu vermeiden, daß bei einem Ausfall der Stromversorgung der Speicherinhalt, d.h. im vorliegenden Fall die genannten Steuerbefehlsfolgen, verloren gehen, ist dieser Schreib-Lese-Speicher als nichtflüchtiger Speicher ausgebildet. Als Beispiele für derartige nichtflüchtige Speicher seien hier batteriegepufferte RAM's ,Flash-Speicher und sogenannte NOV("nonviolated")-RAM's genannt. Alternativ können jedoch für die Speicherung der Lade-und Betriebs-Steuerbefehlsfolgen auch programmierbare Festwertspeicher, wie z.B. PEROM's oder EEPROM's, benutzt werden. Derartige Festwertspeicher können im übrigen auch anstelle des oben erwähnten Festwertspeichers ROM, welcher beispielsweise als maskenprogrammierter Festwertspeicher ausgebildet ist, benutzt sein.

Abschließend sei noch darauf hingewiesen, daß zwar vorstehend die vorliegende Erfindung am Beispiel zweier miteinander verbundener Datenübertragungseinrichtungen erläutert worden ist. Die vorliegende Erfindung ist jedoch nicht darauf beschränkt, sondern sie ist vielmehr allgemein dann anwendbar, wenn in miteinander verbundene, programmgesteuerte elektrische Einrichtungen Betriebs-Steuerbefehlsfolgen zu laden bzw. fernzuladen sind.

## Patentansprüche

1. Verfahren zum Laden einer für den Betrieb einer programmgesteuerten elektrischen Einrichtung (DUE), insbesondere Datenübertragungseinrichtung, erforderlichen Betriebs-Steuerbefehlsfolge in eine der elektrischen Einrichtung zugehörige Speicheranordnung (M) mit Hilfe einer ersten, in einem der Speicheranordnung zugehörigen Festwertspeicher (ROM) gespeicherten Lade-Steuerbefehlsfolge, wobei die betreffende elektrische Einrichtung wenigstens eine erste, für die Übertragung von Steuersignalen dienende Schnittstellenanordnung (E/A1) sowie eine zweite, für eine Digitalsignalkommunikation mit wenigstens einer weiteren elektrischen Einrichtung dienende Schnittstellenanordnung (E/A2) aufweist, wobei an die erste Schnittstellenanordnung eine programmgesteuerte Ladeeinrichtung (PC) angeschlossen wird, in welcher wenigstens die zu ladende Betriebs-Steuerbefehlsfolge und eine für deren Übertragung dienende erste ÜbertragungsSteuerbefehlsfolge gespeichert sind, und wobei auf das Aktivieren ersten Übertragungs-Steuerbefehlsfolge in der Ladeeinrichtung (PC) hin zunächst zu der betreffenden elektrischen Einrichtung ein in der elektrischen Einrichtung das Aktivieren der Lade-Steuerbefehlsfolge bewirkendes, erstes Steuersignal und anschließend die Betriebs-Steuerbefehlsfolge übertragen und in der Speicheranordnung der betreffenden elektrischen Einrichtung gespeichert wird,
**dadurch gekennzeichnet,**
daß von der Ladeeinrichtung (PC) her über die erste Schnittstellenanordnung (E/A1) wahlweise ein zweites Steuersignal übertragen wird, auf dessen Auftreten hin in der betreffenden elektrischen Einrichtung eine zweite, in der Speicheranordnung der elektrischen Einrichtung gespeicherte Lade-Steuerbefehlsfolge aktiviert wird,
daß auf das Aktivieren der zweiten Lade-Steuerbefehlsfolge von der betreffenden elektrischen Einrichtung her ein dem zweiten Steuersignal entsprechendes Steuersignal über die zweite Schnittstellenanordnung (E/A2) zu einer weiteren, der betreffenden elektrischen Einrichtung entsprechenden elektrischen Einrichtung übertragen wird,
daß auf das Auftreten dieses zweiten Steuersignals hin in der weiteren elektrischen Einrichtung eine der zweiten Lade-Steuerbefehlsfolge entsprechende Lade-Steuerbefehlsfolge aktiviert wird
und daß anschließend eine in der Ladeeinrichtung (PC) gespeicherte, gegebenenfalls von der genannten Betriebs-Steuerbefehlsfolge abweichende Betriebs-Steuerbefehlsfolge über die mit der Ladeeinrichtung (PC) verbundene elektrische Einrichtung und die zweite Schnittstellenanordnung (E/A2) zu der weiteren elektrischen Einrichtung hin übertragen und dort in einer Speicheranordnung (M) gespeichert wird.

2. Verfahren nach Anspruch 1,
**dadurch gekennzeichnet**,
daß das erste und zweite Steuersignal jeweils in Form eines Steuersignalblockes, die in der jeweiligen elektrischen Einrichtung (DUE1 bzw. DUE2) zu speichernde Betriebs-Steuerbefehlsfolge dagegen in Form wenigstens eines Datenblockes übertragen werden,
daß der jeweilige Steuersignalblock bzw. Datenblock aus einem Kommandofeld mit einer festgelegten Anzahl von Steuerbits sowie aus einem der Datensicherung dienenden Prüffeld mit einer gegebenenfalls von der Anzahl der Steuerbits abweichenden Anzahl von Prüfbits gebildet ist, daß im Falle eines Datenblockes zwischen Kommando feld und Prüffeld ein der Übertragung von zumindest einem Teil der jeweiligen Betriebs-Steuerbefehlsfolge dienendes, zumindest hinsichtlich der minimalen Bitanzahl festgelegtes Informationsfeld eingefügt ist
und daß durch unterschiedliche Bitkombinationen des Kommandofeldes das Vorliegen einer der beiden Steuersignale bzw. eines Datenblockes markiert ist.

3. Verfahren nach Anspruch 2,
**dadurch gekennzeichnet,**
daß auf das Auftreten eines Steuersignalblockes hin in der jeweiligen elektrischen Einrichtung (DUE1 bzw. DUE2) zunächst anhand des in dem betreffenden Steuersignalblock enthaltenen Prüffeldes eine Überprüfung hinsichtlich einer fehlerfreien Übertragung vorgenommen wird,
daß lediglich bei Vorliegen einer fehlerfreien Übertragung die in Frage kommende Lade-Steuerbefehlsfolge aktiviert und ein diese Aktivierung anzeigendes Quittungssignal zu der Ladeeinrichtung (PC) hin übertragen wird und daß von der Ladeeinrichtung her auf das Eintreffen eines solchen Quittungssignales hin die Übertragung von Datenblöcken erfolgt.

4. Verfahren nach Anspruch 2 oder 3,
**dadurch gekennzeichnet,**
daß auf das Auftreten eines Datenblockes hin von der jeweiligen elektrischen Einrichtung (DUE1 bzw. DUE2) zunächst anhand des in dem betreffenden Datenblock enthaltenden Prüffeldes eine Überprüfung auf eine fehlerfreie Übertragung durchgeführt wird
und daß im Falle einer fehlerhaften Übertragung sofort ein erstes Quittungssignal, im Falle einer fehlerfreien Übertragung dagegen erst nach der Abspeicherung der in dem betreffenden Datenblock enthaltenen Bits der Betriebs-Steuerbefehlsfolge ein von dem ersten Quittungssignal abweichendes zweites Quittungssignal zu der Ladeeinrichtung (PC) hin übertragen wird.

5. Verfahren nach Anspruch 4,
**dadurch gekennzeichnet,**
daß auf die Abspeicherung der in einem Datenblock enthaltenenen Bits der Betriebs-Steuerbefehlsfolge die gerade gespeicherten Bits hinsichtlich einer fehlerfreien Speicherung überprüft werden
und daß im Falle einer fehlerhaften Speicherung von der jeweiligen elektrischen Einrichtung her anstelle des zweiten Quittungssignales eines von diesem abweichendes drittes Quittungssignal zu der Ladeeinrichtung (PC) hin übertragen wird.

6. Verfahren nach einem der Ansprüche 1 bis 5,
**dadurch gekennzeichnet,**
daß von der Ladeeinrichtung (PC) her unter Aktivieren der ersten Lade-Steuerbefehlsfolge in der mit dieser verbundenen elektrischen Einrichtung die zweite Lade-Steuerbefehlsfolge zu der betreffenden elektrischen Einrichtung hin übertragen und dort in einem festgelegten Speicherbereich der zugehörigen Speicheranordnung gespeichert wird
und daß nach dem Speichern dieser zweiten Lade-Steuerbefehlsfolge der in Frage kommende Speicherbereich vor einem Schreibzugriff geschützt wird.

## Claims

1. Method for loading an operation control command sequence, required for the operation of a programcontrolled electrical device (DUE), particularly a data transmission device, into a memory arrangement (M) belonging to the electrical device with the aid of a first load control command sequence stored in a read-only memory (ROM) belonging to the memory arrangement, the relevant electrical device exhibiting at least one first interface arrangement (E/A1) used for the transmission of control signals and a second interface arrangement (E/A2) used for digital signal communication with at least one further electrical device,
the first interface arrangement being connected to a program controlled loading device (PC) in which at least the operation control command sequence to be loaded and a first transmission control command sequence used for transmitting the former are stored, and wherein, following the activation of the first transmission control command sequence in the loading device (PC), firstly a first control signal effecting the activation of the load control command sequence in the electrical device, and then the operation control command sequence are transmitted towards the relevant electrical device and stored in the memory arrangement of the relevant electrical device,
characterized in that optionally a second control signal is transmitted from the loading device (PC) via the first interface arrangement (E/A1), following the occurrence of which second control signal a second load control command sequence stored in the memory arrangement of the electrical device is activated in the relevant electrical device,
that, following the activation of the second load control command sequence a control signal corresponding to the second control signal is transmitted from the relevant electrical device via the second interface arrangement (E/A2) to a further electrical device corresponding to the relevant electrical device,
that, following the occurrence of this second control signal, a load control command sequence corresponding to the second load control command sequence is activated in the further electrical device,
and that subsequently an operation control command sequence, possibly deviating from the said operation control command sequence and stored in the loading device (PC) is transmitted via the electrical device connected to the loading device (PC) and the second interface arrangement (E/A2) towards the further electrical device, where it is stored in a memory arrangement (M).

2. Method according to Claim 1, characterized in that the first and second control signal are in each case transmitted in the form of a control signal block but the operation control command sequence to be stored in the respective electrical device (DUE1 and/or DUE2) is transmitted in the form of at least one data block,
that the respective control signal block and/or data block is formed from a command field having a fixed number of control bits and from a test field used for data protection and having a number of test bits which may deviate from the number of control bits,
that in the case of a data block between command field and test field, an information field used for the transmission of at least a part of the respective operation control command sequence and fixed at least with respect to the minimum number of bits is inserted, and that the presence of one of the two control signals and/or of a data block is marked by different bit combinations of the command field.

3. Method according to Claim 2, characterized in that, following the occurrence of a control signal block, a check with respect to error-free transmission is first performed in the respective electrical device (DUE1 and/or DUE2) by means of the test field contained in the relevant control signal block,
that the load control command sequence in question is only activated if the transmission is error free and an acknowledgement signal indicating this activation is transmitted towards the loading device (PC), and that data blocks are transmitted from the loading device following the arrival of such an acknowledgement signal.

4. Method according to Claim 2 or 3, characterized in that, following the occurrence of a data block, a check for error-free transmission is first performed by the respective electrical device (DUE1 and/or DUE2) by means of the test field contained in the relevant data block,
and that in the case of an errored transmission, a first acknowledgement signal is transmitted immediately but in the case of an error-free transmission, a second acknowledgement signal deviating from the first acknowledgement signal is only transmitted towards the loading device (PC) after the bits of the operation control command sequence contained in the relevant data block have been stored.

5. Method according to Claim 4, characterized in that, following the storage of the bits of the operation control command sequence contained in a data block, the bits just stored are checked with respect to error-free storage,
and that in the case of errored storage, the respective electrical device transmits, instead of the second acknowledgement signal, a third acknowledgement signal deviating from the former towards the loading device (PC).

6. Method according to one of Claims 1 to 5, characterized in that the loading device (PC) transmits, with activation of the first load control command sequence in the electrical device connected to it, the second load control command sequence towards the relevant electrical device where it is stored in a fixed memory area of the associated memory arrangement, and that, after the storage of this second load control command sequence, the memory area in question is protected against a write access.

## Revendications

1. Procédé pour charger une séquence d'instructions de commande d'exploitation, nécessaire à l'exploitation d'un dispositif électrique (DUE) commandé par programme, notamment d'un dispositif de transmission de données, dans un dispositif de mémoire (M) associé au dispositif électrique à l'aide d'une première séquence d'instructions de commande de chargement mémorisée dans une mémoire morte (ROM) associée au dispositif de mémoire, dans lequel
le dispositif électrique concerné comporte au moins un premier dispositif d'interface (E/A1) servant à la transmission de signaux de commande et un deuxième dispositif d'interface (E/A2) servant à une communication de signaux numériques avec au moins un autre dispositif électrique,
on raccorde au premier dispositif d'interface un dispositif de chargement (PC) commandé par programme et dans lequel au moins la séquence d'instructions de commande d'exploitation à charger et une première séquence d'instructions de commande de transmission servant à la transmission de celle-ci sont mémorisées, et dans lequel
après l'activation de la première séquence d'instructions de commande de transmission dans le dispositif de chargement (PC), on transmet au dispositif électrique concerné d'abord un premier signal de commande provoquant dans le dispositif électrique l'activation de la séquence d'instructions de commande de chargement et ensuite la séquence d'instructions de commande d'exploitation et on la mémorise dans le dispositif de mémoire du dispositif électrique concerné,
caractérisé par le fait que
à partir du dispositif de chargement (PC) et par l'intermédiaire du premier dispositif d'interface (E/A1). on transmet si nécessaire un deuxième signal de commande dont l'apparition dans le dispositif électrique concerné y provoque l'activation d'une deuxième séquence d'instructions de commande de chargement mémorisée dans le dispositif de mémoire du dispositif électrique,
après l'activation de la deuxième séquence d'instructions de commande de chargement, à partir du dispositif électrique concerné, on transmet un signal de commande, correspondant au deuxième signal de commande, par l'intermédiaire du deuxième dispositif d'interface (E/A2) à un autre dispositif électrique correspondant au dispositif électrique concerné,
après l'apparition de ce deuxième signal de commande, dans l'autre dispositif électrique, on active une séquence d'instructions de commande de chargement correspondant à la deuxième séquence d'instructions de commande de chargement
et, ensuite, on transmet une séquence d'instructions de commande d'exploitation, mémorisée dans le dispositif de chargement (PC) et éventuellement différente de la séquence d'instructions de commande d'exploitation mentionnée, par l'intermédiaire du dispositif électrique relié au dispositif de chargement (PC) et du deuxième dispositif d'interface (E/A2) à l'autre dispositif électrique où on la mémorise dans un dispositif de mémoire (M).

2. Procédé selon la revendication 1,
caractérisé par le fait que
on transmet le premier et le deuxième signal de commande chacun sous la forme d'un bloc de signal de commande mais les séquences d'instructions de commande d'exploitation à mémoriser dans le dispositif électrique respectif (DUE1, DUE2) sous la forme d'au moins un bloc de données,
on forme le bloc de signal de commande ou le bloc de données à partir d'un champ d'instruction ayant un nombre fixé de bits de commande et à partir d'un champ de contrôle servant à la sécurité des données et ayant un nombre de bits de contrôle éventuellement différent du nombre des bits de commande,
dans le cas d'un bloc de données, on insère entre le champ d'instruction et le champ de contrôle un champ d'information servant à la transmission d'au moins une partie de la séquence d'instructions de commande d'exploitation concernée et dont au moins le nombre minimal de bits est fixé et, par différentes combinaisons de bits dans le champ d'instruction, on marque la présence d'un des deux signaux de commande ou d'un bloc de données.

3. Procédé selon la revendication 2,
caractérisé par le fait que
après l'apparition d'un bloc de signal de commande, dans le dispositif électrique considéré (DUE1, DUE2), on effectue d'abord à l'aide du champ de contrôle contenu dans le bloc de signal de commande concerné un contrôle pour s'assurer d'une transmission sans erreur,
c'est seulement en présence d'une transmission sans erreur qu'on active la séquence d'instructions de commande de chargement concernée et qu'on transmet au dispositif de chargement (PC) un signal d'accusé de réception indiquant cette activation
et, à partir du dispositif de chargement (PC), à l'arrivée d'un signal d'accusé de réception de ce genre, on effectue la transmission de blocs de données.

4. Procédé selon la revendication 2 ou 3,
caractérisé par le fait que
après l'apparition d'un bloc de données, dans le dispositif électrique considéré (DUE1, DUE2), on effectue d'abord à l'aide du champ de contrôle contenu dans le bloc de données concerné un contrôle pour s'assurer d'une transmission sans erreur
et, dans le cas d'une transmission avec erreur, on transmet au dispositif de chargement (PC) immédiatement un premier signal d'accusé de réception mais, dans le cas d'une transmission sans erreur, on transmet au dispositif de chargement (PC) seulement après la mémorisation des bits, contenus dans le bloc de données concerné, de la séquence d'instructions de commande d'exploitation un deuxième signal d'accusé de réception différent du premier signal d'accusé de réception.

5. Procédé selon la revendication 4,
caractérisé par le fait que
après la mémorisation des bits, contenus dans un bloc de données, de la séquence d'instructions de commande d'exploitation, on contrôle les bits qui viennent d'être mémorisés pour s'assurer d'une mémorisation sans erreur et, dans le cas d'une mémorisation avec erreur, à partir du dispositif électrique respectif, on transmet au dispositif de chargement (PC) à la place du deuxième signal d'accusé de réception un troisième signal d'accusé de réception différent du deuxième.

6. Procédé selon l'une des revendications 1 à 5,
caractérisé par le fait que
à partir du dispositif de chargement (PC), après l'activation de la première séquence d'instructions de commande de chargement dans le dispositif électrique relié à ce dispositif de chargement, on transmet la deuxième séquence d'instructions de commande de chargement au dispositif électrique concerné où on la mémorise dans une zone de mémoire fixée du dispositif de mémoire associé
et, après la mémorisation de cette deuxième séquence d'instructions de commande de chargement, on protège contre tout accès en écriture la zone de mémoire concernée.
